# EUROPÄISCHE PATENTSCHRIFT

(11) **EP 3 562 651 B1**
(45) Veröffentlichungstag und Bekanntmachung des Hinweises auf die Patenterteilung: **27.03.2024**
(21) Anmeldenummer: 17821926.7
(22) Anmeldetag: 22.12.2017
(51) Int. Cl.: B29C 64/153, B29C 64/118, B33Y 80/00, B33Y 70/10, B33Y 10/00

(54) **ADDITIVES FERTIGUNGSVERFAHREN MIT EINEM AUFBAUMATERIAL ENTHALTEND EINEN IR-ABSORBER**
ADDITIVE PRODUCTION METHOD, WITH A STRUCTURAL MATERIAL CONTAINING AN IR ABSORBER
PROCÉDÉ DE FABRICATION ADDITIVE AU MOYEN D'UN MATÉRIAU DE CONSTRUCTION COMPRENANT UN ABSORBANT INFRA-ROUGE

(30) Priorität: 28.12.2016 EP 16207138; 28.12.2016 EP 16207145
(43) Veröffentlichungstag der Anmeldung: 06.11.2019
(73) Patentinhaber: Stratasys, Inc., Eden Prairie, MN 55344 (US)
(72) Erfinder: ACHTEN, Dirk, 51375 Leverkusen (DE); BÜSGEN, Thomas, 51377 Leverkusen (DE); WEHRMANN, Rolf, 47800 Krefeld (DE); HEUER, Helmut, Werner, 57074 Siegen (DE)
(74) Vertreter: Davepon, Björn
(86) Internationale Anmeldenummer: PCT/EP2017/084286
(87) Internationale Veröffentlichungsnummer: WO 2018/122142

(56) Entgegenhaltungen:
- WO-A1-2005/090056
- WO-A2-2015/193819
- DE-A1- 19 918 981
- US-A1- 2015 028 523

## Beschreibung

Die vorliegende Erfindung betrifft ein Verfahren zur Herstellung eines Gegenstands, umfassend den Schritt der Herstellung des Gegenstands mittels eines additiven Fertigungsverfahrens aus einem Aufbaumaterial, wobei das Aufbaumaterial ein Polymer ausgewählt aus der Gruppe: (Co)Polycarbonate, Polyester, Polyestercarbonate, Polyformale, Polyamide, Polyether, Polyvinylchlorid, Polymethyl(meth)acrylat, Polystyrol oder einer Kombination aus mindestens zwei hiervon und ein Infrarot-Strahlung absorbierendes Additiv umfasst.

Der Einsatz von Polycarbonaten in additiven Fertigungsverfahren ("3D-Druckverfahren") ist grundsätzlich bekannt. So offenbart WO 2015/077053 A1 einen Gegenstand mit verringerter Dichte umfassend eine thermoplastische Polycarbonat-Zusammensetzung. Der Gegenstand weist eine Dichte (ASTM D792-00) von 80% bis 99%, bezogen auf das Gewicht eines ähnlichen massiven Spritzgusskörpers ohne Hohlräume auf. Weiterhin weist der Gegenstand eine Mikrostruktur, bestimmt durch optische Mikroskopie, mit 1 Volumen-% bis 20 Volumen-% an Hohlräumen auf, wobei wenigstens 80% der Hohlräume solche mit einem großen Verhältnis von Länge zu Breite sind und weniger als 20% der Hohlräume kugelförmige Hohlräume mit einem Durchmesser zwischen 10 und 100 Mikrometern sind. Die thermoplastische Polycarbonat-Zusammensetzung umfasst wenigstens 50 mol-% Bisphenol A und weist ein gewichtsmittleres Molekulargewicht (M_{w}) von 10000 bis 50000, eine Glasübergangstemperatur Tg von 130 °C bis 180 °C, einen Gehalt an phenolischen OH-Gruppen von weniger als 50 ppm, einen Halogengruppengehalt von unter 100 ppm und einen Diarylcarbonat-Gehalt von weniger als 1 Gewichts-% auf. Der Gegenstand wird mittels einer Monofilament-basierten additiven Herstellungstechnik gefertigt.

WO 2015/195527 A1 betrifft ein Verfahren zur Herstellung eines thermoplastischen Gegenstands, in dem eine Mehrzahl von Schichten eines thermoplastischen Materials in einem vorbestimmten Muster abgelegt wird, um den Artikel zu bilden. Das thermoplastische Material umfasst eine thermoplastische Zusammensetzung mit einem Schmelzflussindex von 30 Gramm/10 Minuten bis 75 Gramm/10 Minuten gemäß ASTM D1238-04 bei entweder 230 °C und 3.8 kg oder bei 300 °C und 1.2 kg. Das thermoplastische Material kann ein Polycarbonat-Homopolymer, ein Polycarbonat-Copolymer, ein Polyester oder deren Kombination sein.

WO 2015/193818 A1 offenbart ein Verfahren zur Herstellung eines Gegenstands, in dem eine oder mehrere Schichten eines extrudierten Materials im geschmolzenen Zustand ein einem vorbestimmten Muster abgelegt werden, wobei wenigstens eine der Schichten aus einem Aufbaumaterial gebildet ist. Das Aufbaumaterial wird einer effektiven Dosis ultravioletter Strahlung ausgesetzt, um eine Quervernetzung innerhalb des Gegenstands auszulösen. Das Aufbaumaterial ist hierbei eine polymere Zusammensetzung, welche ein quervernetzbares Polycarbonat-Harz mit einer von einem Benzophenon abgeleiteten photoaktiven Gruppe enthält.

WO 2010/090893 A1 beschäftigt sich mit passiven Möglichkeiten, um die Aufheizung von Innenräumen durch Sonneneinstrahlung zu verringern und betrifft einen transparenten mehrschichtigen Gegenstand mit einer Kernschicht umfassend ein thermoplastisches Carbonatpolymer, einer ersten Schicht umfassend ein thermoplastisches Carbonatpolymer und ein Infrarot (IR) absorbierendes Additiv und einer zweiten Schicht umfassend ein thermoplastisches Carbonatpolymer und einen Ultraviolett- (UV-) Stabilisator. Die erste Schicht enthält kein UV absorbierendes Additiv und die zweite Schicht enthält kein IR absorbierendes Additiv.

WO 2013/057074 A1 betrifft Polymerzusammensetzungen zur Herstellung von Formteilen, insbesondere Brillen und Sichtschutzvorrichtungen, die den Vorgaben der EN 169 (Schweißerschutznorm) sowie der EN 1836/2005 (Signallichterkennung) genügen. Beschrieben wird eine Wärme absorbierende thermoplastische Formmasse enthaltend: A) 73.9750 bis 99.9948 Gew.-% mindestens eines transparenten thermoplastischen Kunststoffs; B) 0.05 bis 0.50 Gew.-% mindestens eines UV-Stabilisators; C) 0 Gew. -Teile bis 1 ,00 Gew. -Teile mindestens eines Entformungsmittels; D) 0.0001 bis 0.500 Gew.-%, mindestens eines anorganischen IR-Absorbers, ausgenommen Ruß, bezogen auf den reinen anorganischen IR- Absorber; E) 0 bis 0.01 Gew.-% mindestens eines organischen IR-Absorbers; F) 0 bis 0.0150 Gew.-% Ruß; G) 0 bis 1.0 Gew.-% mindestens eines Thermostabilisators; H) 0 bis 7.0 Gew.-% mindestens eines Flammschutzmittels; I) 0 bis 15.00 Gew.-% weitere Additive sowie K) 0.0001 bis 1.000 Gew.-% mindestens ein organisches Farbmittel oder organische Farbmittelkomplexe, wobei die Summe der Gewichtsteile der Komponenten A bis K sich zu 100 Gew.-% addiert. Der thermoplastische Kunststoff kann Polycarbonat sein.

WO 2012/080397 A2 offenbart eine Infrarotstrahlung-(IR)-absorbierende PolymerZusammensetzung enthaltend einen transparenten thermoplastischen Kunststoff, einen anorganischen Infrarotabsorber, nachfolgend auch als IR-Absorber bezeichnet, optional ein anorganisches nanoskaliges Pigment und die Kombination von mindestens einem organischen Farbmittel spezieller Struktur sowie die Herstellung und Verwendung der PolymerZusammensetzungen und die daraus hergestellten Erzeugnisse.

WO 2005/090056 A1 betrifft eine pulverförmige Zusammensetzung zur Verarbeitung in einem Verfahren zum schichtweisen Aufbau von dreidimensionalen Gegenständen mittels Laser, bei dem selektiv Bereiche der jeweiligen Pulverschicht aufgeschmolzen werden, wobei dass das Pulver zumindest ein Polymer und zumindest einen Absorber aufweist, wobei ein Laser mit einer Wellenlänge zwischen 100 und 3000 nm eingesetzt werden kann.

WO 2016/134224 A1 beschreibt ein Verfahren zur Herstellung von sphärischen Polymerpartikeln, welche IR-Absorber enthalten können. Ein hieraus hergestellter Gegenstand kann ein 3D-gedruckter Gegenstand sein.

Polycarbonate haben einen geringen Kristallinitätsgrad, eine vergleichsweise hohe Schmelztemperatur und eine deutlich über Raumtemperatur liegende Glasübergangstemperatur. Diese Kombination der Eigenschaften bringt jedoch spezielle Herausforderungen für den Einsatz von Polycarbonaten in additiven Fertigungsverfahren mit sich. Hierbei handelt es sich insbesondere um die Haftung von einzelnen Strang- oder Partikellagen untereinander. Es kann der Fall eintreten, dass Polymerketten einer Lage sich nicht mehr mit Polymerketten einer vorherigen Lage verknäueln können. Ferner kann der Fall eintreten, dass die vorherige Lage bereits so weit abgekühlt ist, dass eine Wärmeübertragung zwischen der gerade aufgetragenen Lage und der vorigen Lage nicht ausreicht, um durch die inhärenten kohäsiven Eigenschaften des Materials eine zufriedenstellende Haftung der Lagen zu bewirken.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, mit dem Polycarbonat-basierte Aufbaumaterialien mit einer verbesserten Haftung der einzelnen Lagen untereinander verarbeitet werden können.

Erfindungsgemäß gelöst wird die Aufgabe durch ein Verfahren gemäß Anspruch 1. Vorteilhafte Weiterbildungen sind in den Unteransprüchen angegeben.

Das additive Fertigungsverfahren kann beispielsweise ausgewählt sein aus Schmelzschichtung (Fused Filament Fabrication, FFF oder Fused Deposition Modeling, FDM), Selective Laser Sintering, Selective Laser Melting oder High Speed Sintering.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0.025 und 1.25 mm, der Austrittsdurchmesser des Materialstrahls (Düsenauslassdurchmesser) von der Düse beträgt typischerweise mindestens bei 0.05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch und/oder einen gegebenenfalls vorhandenen Bauraum zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Es ist erfindungsgemäß weiterhin vorgesehen, dass das Aufbaumaterial ein Polymer aus der zuvor genannten Gruppe und ein Infrarot-Strahlung absorbierendes Additiv umfasst. Das Infrarot-Strahlung absorbierende Additiv ("IR-Absorber") dient dazu, die Temperatur des Polymers in einem für die Haftung an weiterem Polymer förderlichen Bereich zu halten beziehungsweise das Abkühlen des Polymers zu verlangsamen.

Während des additiven Fertigungsverfahrens wird das Aufbaumaterial zumindest zeitweise Infrarot-Strahlung im Wellenlängenbereich zwischen 600 nm und 1700 nm ausgesetzt. Hierbei muss nicht der gesamte genannte Wellenlängenbereich abgedeckt werden, solange eine Absorption der IR-Strahlung durch den Absorber stattfindet und somit das Polymer erwärmt wird. Beispielsweise kann der Wellenlängenbereich eines CO₂-Lasers (≥ 940 nm bis ≤ 1060 nm) ausgewählt werden.

Die Infrarot-Strahlung kann mittels einer IR-Strahlungsquelle in das Aufbaumaterial eingetragen werden. Eine zuvor abgelegte Lage des Aufbaumaterials kann durch den vorhandenen IR-Absorber in Verbindung mit ohnehin präsenter Wärmestrahlung oder mit gezielt eingetragener Wärmestrahlung auf einer solchen Temperatur gehalten werden, dass die aktuelle Lage des Aufbaumaterials sich unter Ausbildung einer guten Haftung mit ihr verbindet.

Insbesondere kann das Aufbaumaterial einer zuvor abgelegten Lage des Aufbaumaterials auf einer Temperatur oberhalb des Ansatzpunktes der Glasübergangstemperatur des Aufbaumaterials gehalten werden.

Das Verfahren kann so durchgeführt werden, dass eine Aufbaukammer, in der der Gegenstand aufgebaut wird, nicht mehr oder nur noch weniger beheizt werden muss. Dann lassen sich thermische Bauteilverformungen ("Warping") verringern oder ganz vermeiden.

Das IR-Strahlung absorbierende Additiv ist hinsichtlich seiner chemischen Struktur und seiner Konzentration im Aufbaumaterial gemäß einem ersten Gegenstand der Erfindung derart ausgewählt, dass es die Transmission (definiert als Verhältnis der Intensitäten des Lichts vor und nach Passieren der Probe) des Aufbaumaterials für Licht im Wellenlängenbereich zwischen 600 nm und 1700 nm, bestimmt an einer 100 µm dicken Probe, um ≥ 2.5 Prozentpunkte, bevorzugt ≥ 5 Prozentpunkte, bevorzugt ≥ 10 Prozentpunkte, bevorzugt ≥ 15 Prozentpunkte und mehr bevorzugt ≥ 20 Prozentpunkte gegenüber einer das Infrarot-Strahlung absorbierende Additiv nicht enthaltenden Probe des Aufbaumaterials mit einer Dicke von 100 µm verringert. Die Transmissionsmessungen können mit einem Spektralphotometer mit Photometerkugel gemäß ISO 13468-2 durchgeführt werden. Das IR-Strahlung absorbierende Additiv kann eine Einzelsubstanz oder eine Mischung aus mehreren die IR-Strahlung absorbierenden Verbindungen sein.

Somit lässt sich die Auswahl eines geeigneten IR-Absorbers bevorzugt derart bewerkstelligen, dass zunächst die Transmission einer 100 µm dicken Probe für Licht im Wellenlängenbereich zwischen 600 nm und 1700 nm, bevorzugt 800 nm und 1100 nm (nahes IR), bestimmt wird. Diese Probe besteht aus dem Aufbaumaterial, enthält jedoch keinen IR-Absorber. Hierbei kann beispielsweise als Ergebnis erhalten werden, dass in dem untersuchten Wellenlängenbereich die Transmission maximal 85% und minimal 80% beträgt. Anschließend wird eine 100 µm dicke Probe des Aufbaumaterials einschließlich IR-Absorber gemäß dem gleichen Verfahren hinsichtlich der Transmission im untersuchten Wellenlängenbereich vermessen. Hierbei kann als Ergebnis erhalten werden, dass in diesem Wellenlängenbereich die Transmission maximal 35% und minimal 30% beträgt. Dann hat der hinzugefügte IR-Absorber die Transmission des Aufbaumaterials im betreffenden Wellenlängenbereich um maximal 85 - 30 = 55 Prozentpunkte und minimal um 80 - 35 = 45 Prozentpunkte verringert. Solch ein beispielhafter IR-Absorber wäre erfindungsgemäß geeignet.

Gemäß der Erfindung, sind die IR-Absorber ausgewählt aus der Gruppe bestehend aus Boriden, Wolframaten, Mischungen aus mindestens einem Borid und mindestens einem Wolframat, organischen IR-Absorbern oder eine Kombination von mindestens zwei hiervon. Die Konzentration an IR-Absorber kann beispielsweise ≥ 0.0005 bis ≤ 3.0 Gewichts-%, bezogen auf das Gesamtgewicht des Aufbaumaterials, betragen. Bevorzugt beträgt diese Konzentration ≥ 0.005 bis ≤ 2.5 Gewichts-%, besonders bevorzugt ≥ 0.01 bis ≤ 2 Gewichts-%.

Im Aufbaumaterial erfindungsgemäß vorgesehene Polymere sind (Co)Polycarbonate (PC), Polyester, Polyestercarbonate, Polyformale, Polyamide (PA), Polyether, Polyvinylchlorid (PVC), Polymethyl(meth)acrylat (PMMA), Polystyrol (PS) oder eine Kombination aus mindestens zwei hiervon. Solche Polymere lassen sich als weitestgehend amorphe Polymere mit einer hohen Glasübergangstemperatur charakterisieren. Hierbei ist als Aufbaumaterial ein Polycarbonat-Polymer bevorzugt.

Polycarbonat (PC)-Polymere können sowohl Homopolycarbonate als auch Copolycarbonate sein; die Polycarbonate können in bekannter Weise linear oder verzweigt sein. Erfindungsgemäß können auch Mischungen von Polycarbonaten verwendet werden. Die Polycarbonate können aromatische, aliphatische oder gemischt aromatisch/aliphatische Polycarbonat-Polymere sein. Die Herstellung der Polycarbonate erfolgt in bekannter Weise aus Diolen, Kohlensäurederivaten, gegebenenfalls Kettenabbrechern und Verzweigern.

Einzelheiten der Herstellung von Polycarbonaten sind in vielen Patentschriften niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von tri funktionellen oder mehr als tri funktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kemarylierte und kemhalogenierte Verbindungen. Bevorzugte Diphenole sind 4,4'-Dihydroxydiphenyl,2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4- hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyi)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A. Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 21 1 956 und DE-A 3 832 396. in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Geeignete aliphatische Diole sind insbesondere solche der Formel H[O-T-]ₙ-OH wobei n eine Zahl zwischen 1 und 100, bevorzugt 1 bis 80 und besonders bevorzugt 1 bis 45 und T einen verzweigten oder linearen, gesättigten oder ungesättigten Alkyl-, Cycloalkylteil mit 3 bis 20 Kohlenstoffatomen darstellt. Bevorzugt sind gesättigte, lineare Alkyldiole mit 3 bis 15 Kohlenstoffatomen, besonders bevorzugt mit 3 - 10 Kohlenstoffatomen, ganz besonders bevorzugt mit 6-10 Kohlenstoffatomen und insbesondere auch 7-10 Kohlenstoffatomen.

Exemplarisch, aber nicht ausschließlich genannt seien 1,7-Heptandiol, 1,8-Octandiol, 1,6-Hexandiol, 1,5-Pentandiol, 1,4-Butandiol, 1,3-Propandiol, 2-Methyl-1,3-propandiol, 3-Methyl-1,5-pentandiol, 2-Methylpentandiol, 2,2,4-Trimethyl-1,6-hexandiol, 2-Ethyl-1,6-hexandiol, 2,3,5-Trimethyl-1,6-hexandiol, Cyclohexan-dimethanol, Neopentylglykol und Polyethylenglykol, Polypropylenglykol, Polybutylenglykol sowie Polyetherpolyole, die durch Copolymerisation von z.B. Ethylenoxid und Propylenoxid erhalten wurden oder Polytetramethylenglykol, das durch ringöffnende Polymerisation von Tetrahydrofuran (THF) erhalten wurde, Di-, Tri-, und Tetrahexyletherglykol sowie Mischungen verschiedener Diole.

Weiterhin können Additionsprodukte der Diole mit Lactonen (Esterdiole) wie z.B. Caprolacton, Valerolacton etc. eingesetzt werden, sowie Mischungen der Diole mit Lactonen, wobei eine einleitende Umesterung von Lactonen und Diolen nicht nötig ist.

Eingesetzt werden können auch die Additionsprodukte der beschriebenen Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw., Ester der Dicarbonsäuren, wobei eine einleitende Umesterung von Dicarbonsäure und den Diolen nicht nötig ist. Es können auch Mischungen verschiedener Diole, Lactone und Dicarbonsäuren eingesetzt werden.

Bevorzugt werden in als aliphatische Diole 1,6-Hexandiol, 1,5-Pentandiol und Mischungen aus 1,6-Hexandiol und Caprolacton eingesetzt.

Im Fall der Homopolycarbonate wird nur ein Diol eingesetzt, im Fall der Copolycarbonate werden mehrere Diole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol oder Mischungen aus mindestens zwei hiervon. Bevorzugte Kettenabbrecher sind die Phenole, welche ein- oder mehrfach mit C1- bis C30-Alkylresten, linear oder verzweigt, bevorzugt unsubstituiert, oder mit tert.-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0.1 bis 5 Mol-%, bezogen auf Mole an jeweils eingesetzten Diolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen. Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl- 4-hydroxyphenyl)-2-oxo-2,3-dihydroindol.

Die Menge der gegebenenfalls einzusetzenden Verzweiger beträgt bevorzugt 0.05 Mol-% bis 2.00 Mol-%, bezogen auf Mole an jeweils eingesetzten Diolen.

Die Verzweiger können entweder mit den Diolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Zur Einarbeitung von Additiven wird das Polycarbonat-Polymer bevorzugt in Form von Pulvern, Granulaten oder aus Gemischen aus Pulvern und Granulaten eingesetzt. Das Aufbaumaterial kann noch weitere Additive und/oder Füllstoffe (beispielsweise Glas- oder Carbonfasern, Silikate, Talk, Titandioxid, oder Bariumsulfat) Entformungs- und/ oder Flammschutzmittel, organische und anorganische Lichtstreumittel, Stabilisatoren (beispielsweise Thermo- und/oder Lichtstabilisatoren) und dergleichen, aber auch weitere Polymere, enthalten. Der Gesamtgehalt an Additiven im Aufbaumaterial kann beispielsweise ≥ 0.01 Gewichts-% bis ≤ 10 Gewichts-%, bevorzugt ≥ 0.1 Gewichts-% bis ≤ 8 Gewichts-%, besonders bevorzugt 6 Gew.-% betragen. Der Gehalt an Füllstoffen kann beispielsweise ≥ 0.0 Gewichts-% bis ≤ 50 Gewichts-%, bevorzugt ≥ 3 Gewichts-% bis ≤ 40 Gewichts-%, betragen.

Gemäß der Erfindung, liegt das Infrarot-Strahlung absorbierende Additiv an der Oberfläche des Aufbaumaterials vor. Es kann zum Beispiel durch Mischen mit einem partikelförmigen Aufbaumaterial oder durch Beschichtung eines FDM-Filaments auf die Oberfläche des Aufbaumaterials aufgetragen werden.

In einer weiteren Ausführungsform, die Bestandteil der Erfindung ist, ist das Infrarot-Strahlung absorbierende Additiv innerhalb des Aufbaumaterials verteilt. Das IR-Strahlung absorbierende Additiv kann insbesondere homogen im Aufbaumaterial verteilt sein. Die feinteiligen IR-Absorber-Partikel können in Form einer Dispersion in die Polymermatrix eingebracht werden.

Diese Dispersion verhindert die Reagglomeration und erleichtert die Einarbeitung in die thermoplastische Polycarbonat-Matrix. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, Polyurethane, Polyether oder Polyester sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt.

Zur Herstellung von anorganischen IR-Absorber-Nanopartikeln kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0.3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Für den Einsatz in transparenten Thermoplasten können die so erhaltenen Partikel in einer organischen Matrix dispergiert werden, z.B. in einem Polycarbonat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen werden.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat oder Polymethylacrylat (zusammen benannt als Polymethyl(meth)acrylat) und Polyester besonders bevorzugt sind. Es können auch Mischungen dieser Polymere oder auch Copolymere auf Acrylatbasis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059- 4061, beschrieben.

Geeignete Dispergiermittel sind kommerziell erhältlich. Insbesondere sind Dispergiermittel auf Polyacrylat-Basis geeignet. Derart geeignete Dispergiermittel sind z.B. unter den Handelsnamen EFKA^{®}, z.B. EFKA^{®}4500 und EFKA^{®}4530 bei BASF SE, Ludwigshafen, DE erhältlich. Polyesterhaltige Dispergiermittel sind ebenfalls geeignet. Sie sind beispielsweise unter den Handelsnamen Solsperse^{®}, z.B. Solsperse^{®}22000, 24000SC, 26000, 27000 von Avecia erhältlich. Ferner sind polyetherhaltige Dispergiermittel z.B. unter den Handelsnamen Disparlon^{®}DA234 und DA325 der Firma Kusumoto Chemicals bekannt. Auch Polyurethan basierte Systeme sind geeignet. Polyurethan-basierte Systeme sind unter dem Handelsnamen EFKA^{®}4046, EFKA^{®}4047 von BASF Ludwigshafen erhältlich. Texaphor^{®}P60 und P63 sind entsprechende Handelsnamen der Cognis/BASF SE, DE.

Die Menge des IR-Absorbers im Dispergiermittel kann 0.2 Gew.-% bis 80.0 Gew.-%, bevorzugt 1.0 Gew.% - 40.0 Gew-%, weiter bevorzugt 5 Gew-% - 35 Gew-%, und am stärksten bevorzugt 10 Gew-% - 30 Gew-% betragen, bezogen auf die eingesetzte Dispersion des anorganischen IR-Absorbers. In der Gesamtzusammensetzung der gebrauchsfertigen IR-Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Gemäß der Erfindung, ist das Infrarot-Strahlung absorbierende Additiv ausgewählt aus der Gruppe: Boride, Wolframate, Mischungen aus mindestens einem Borid und mindestens einem Wolframat, organischer IR-Absorber oder eine Kombination von mindestens zwei hiervon.

Als anorganische IR-Absorber geeignet sind insbesondere Materialien auf Basis feinteiliger Boride, wie z.B. Lanthanhexaborid, da sie über eine breite Absorptionsbande verfügen. Derartige Boride auf Basis von La, Ce, Pr, Nd, Tb, Dy, Ho, Y, Sm, Eu, Er, Tm, Yb, Lu, Sr, Ti, Zr, Hf, V, Ta, Cr, Mo, W und Ca sind z.B. in DE 10392543 oder EP 1 559 743 beschrieben.

Ferner sind IR-absorbierende Additive aus der Gruppe der Wolframverbindungen bekannt, die über eine im Vergleich zu den aus dem Stand der Technik bekannten anorganischen IR-Absorbern auf Borid-Basis geringere Eigenabsorption im sichtbaren Spektralbereich verfügen, wobei insbesondere Zink-dotierte Wolframverbindungen mit erhöhter Langzeitstabilität bevorzugt verwendet werden.

Unter den anorganischen IR-Absorbem sind insbesondere Lanthanhexaborid und Cäsiumwolframate sowie Zink-dotierte Cäsiumwolfi-amate bevorzugt.

Die Herstellung und der Einsatz dieser Absorber in thermoplastischen Materialien beispielsweise in H. Takeda, K. Adachi, J. Am. Ceram. Soc. 90, 4059 - 4061, (2007 ), WO 2005037932, JP 2006219662, JP 2008024902, JP 2008150548, WO 2009/059901 und JP 2008214596 beschrieben. Bevorzugt handelt es sich bei IR-Absorbern auf Wolframatbasis um IR-Absorber vom Typ:
b1) W_{y}O_{z} (W = Wolfram, O = Sauerstoff; z/y = 2.20 - 2.99) und/oder
b2) MₓW_{y}O_{z} (M = H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0.001-1.000; z/y = 2.2-3.0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, Cs_{0,33}WO₃, Na_{0,33}WO₃, sowie deren Gemische. In einer besonderen Ausführungsform der vorliegenden Erfindung ist die alleinige Verwendung von Cs_{0,33}WO₃ als anorganischem IR Absorber ganz besonders bevorzugt. Ebenfalls bevorzugt sind Cs/W-Verhältnisse von 0.20 und 0.25, wobei die vorgenannten Wolframverbindungen vom Typ b1) und b2) nachfolgend als Wolframate bezeichnet werden.

In einer weiteren bevorzugten Ausführungsform mit dotierten Wolframaten handelt es sich um Substanzen vom Typ Zn_{w}MₓW_{y}O_{z} (M = mindestens ein Element ausgewählt aus der Gruppe bestehend aus H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0.001-1.000; z/y = 2.2-3.0; w = 0.001 - 0.015), wobei als M die Elemente H, Cs, Rb, K, Tl, In, Ba, Li, Ca, Sr, Fe und Sn bevorzugt sind, wobei hiervon Cs ganz besonders bevorzugt ist. Weiterhin besonders bevorzugt ist Zink-dotiertes Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische.

Kommen IR-Absorber auf Borid-basis zum Einsatz, so sind nanoskalige anorganische IR-Absorber Partikel auf Boridbasis bevorzugt, vorzugsweise ein Metallborid, wobei das Metall ausgewählt aus der Gruppe der folgenden Elemente La, Ce, Pr, Nd, Tb, Dy, Ho, Y, Sm, Eu, ER, Tm, Yb, Lu, Sr, Ti, Zr, Hf, V, Ta, Cr, Mo, W und Ca. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB und CrB₂), Molybdänborid (MoB₂, Mo₂B₅ und MoB), Wolframborid (W₂B₅), oder Kombinationen von mindestens zwei dieser Boride. Ganz besonders bevorzugt sind Boride auf Basis von Lanthanhexaborid (LaB₆) oder Mischungen enthaltend Lanthanhexaborid.

Der Partikeldurchmesser (ermittelt durch TEM/Transmissionselektronenmikroskopie) der anorganischen IR-Absorber ist vorzugsweise kleiner als 200 nm, weiter bevorzugt kleiner als 100 nm und stärker bevorzugt kleiner als 50 nm, wobei der Partikeldurchmesser jeweils bevorzugt größer als 5 nm, weiter bevorzugt größer als 10 nm ist. In einer besonders bevorzugten Ausführungsform ist der durchschnittliche Teilchendurchmesser zwischen 15 nm bis 25 nm. Die Partikel sind im sichtbaren Bereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder dem jeweiligen Endprodukt führt.

Die Oberfläche der IR-Absorber-Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US 2005/0161642 beschrieben. In einer bevorzugten Ausführungsform sind die IR-Absorber-Partikel auf Borid- oder Wolframatbasis mit Titannitrid beschichtet.

Besonders bevorzugt werden Mischungen von LaB₆ mit Cäsiumwolframat eingesetzt.

Das Verhältnis von LaB₆ zu Cäsiumwolframat ist vorzugsweise von 1:6 bis 1:12, weiter bevorzugt von 1:8 bis 1:10.

Die Verhältnisse sind jeweils bezogen auf den Feststoffanteil des reinen IR-Absorbers.

Geeignete zusätzliche organische Infrarot-Absorber sind nach Stoffklassen z.B. in M. Matsuoka, Infrared Absorbing Dyes, Plenum Press, New York, 1990 beschrieben.

Davon sind Quaterylene, Perylene, Phthalocyanine und Naphthalocyanine besonders geeignet. Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenol, Alkylphenoxy, tert-Butyl, (-S-Phenyl), -NH-Aryl, -NH-Alkyl und ähnliche Gruppen.

Insbesondere bevorzugt ist Lumogen IR 765 (CAS-No. 943969-69-5; EG Nr. 454-270-3), Lumogen IR 788 (EG Nr. 451-660-5 / CAS-Nr. 333304-54-4) der BASF Ludwigshafen sowie Excolor HA 1 ((Octaanilinooctafluorophthalocyanato)oxovanadium) der Nippon Shokubai.

Ruß (nicht gemäß der vorliegenden Erfindung) ist ein schwarzer pulverförmiger Feststoff, der je nach Qualität und Verwendung im Wesentlichen aus Kohlenstoff besteht. Der Kohlenstoffgehalt von Ruß liegt im Allgemeinen bei 80.0 bis 99.9 Gew.-%. Bei nicht oxidativ nachbehandelten Rußen beträgt der Kohlenstoffgehalt bevorzugt 96.0 bis 95.5 Gew.-%. Durch Extraktion des Rußes mit organischen Lösungsmitteln, beispielsweise mit Toluol, können Spuren organischer Verunreinigungen auf dem Ruß entfernt werden und dadurch der Kohlenstoffgehalt auch auf größer als 99.9 Gew.-% erhöht werden. Bei oxidativ nachbehandelten Rußen kann der Sauerstoffgehalt bis zu 30 Gew.-%, bevorzugt bis zu 20 Gew.-%, insbesondere 5 bis 15 Gew.-% betragen.

Ruß besteht aus meist kugelförmigen Primärpartikeln mit einer Größe von bevorzugt 10 bis 500 nm. Diese Primärpartikeln sind zu kettenförmigen oder verzweigten Aggregaten zusammengewachsen. Bei den Aggregaten handelt es sich im Allgemeinen um die kleinste in einem Dispergierungsverfahren zerteilbare Einheit des Rußes. Viele dieser Aggregate lagern sich wiederum durch intermolekulare (van-der-Waalssche) Kräfte zu Agglomeraten zusammen. Durch Variation der Herstellbedingungen können sowohl die Größe der Primärteilchen als auch deren Aggregierung (Struktur) gezielt eingestellt werden. Unter Struktur versteht der Fachmann dabei die Art der dreidimensionalen Anordnung der Primärpartikel in einem Aggregat. Von einer "hohen Struktur" spricht man bei Rußen mit stark verzweigten und vernetzten Aggregatstrukturen; bei weitgehend linearen, das heißt wenig verzweigten und vernetzten Aggregatstrukturen spricht man dagegen von "niedriger Struktur".

Als ein Maß für die Struktur eines Rußes wird im Allgemeinen die Öl-Adsorptions-Zahl gemessen nach ISO 4656 mit Dibutylphthalat (DBP) angegeben. Dabei ist eine hohe (Öl-Adsorptions-Zahl ein Indikator für eine hohe Struktur.

Die Primärpartikelgröße eines Rußes lässt sich beispielsweise mittels Rasterelektronenmikroskopie ermitteln. Als ein Maß für die Primärpartikelgröße eines Rußes dient aber auch die BET-Oberfläche des Rußes bestimmt nach ISO 4652 mit Stickstoffadsorption. Dabei ist eine hohe BET-Oberfläche ein Indikator für eine kleine Primärpartikelgröße.

Die Dispergierbarkeit der Agglomerate eines Rußes hängt von der Primärpartikelgröße und der Struktur der Aggregate ab, wobei mit abnehmender Primärpartikelgröße und abnehmender Struktur die Dispergierbarkeit des Rußes in der Regel abnimmt.

Als technisches Produkt wird Industrieruß durch unvollständige Verbrennung oder Pyrolyse von Kohlenwasserstoffen hergestellt. Verfahren zur Herstellung von Industrieruß sind literaturbekannt. Bekannte Verfahren zur Herstellung von Industrierußen sind insbesondere das Furnace-, Gasruß-, Flammruß-, Acetylenruß- und Thermalruß-Verfahren.

Die Partikelgrößenverteilung der Primärteilchen sowie die Größe und Struktur der Primärteilchenaggregate bestimmen die Eigenschaften wie Farbtiefe, Grundton und Leitfähigkeit des Rußes. Leitruße besitzen dabei in der Regel kleine Primärteilchen und weitverzweigte Aggregate. Farbruße sind in der Regel Ruße mit sehr kleinen Primärpartikeln und werden oft nach der Herstellung nach einem der zuvor genannten Prozesse einer nachträglichen Oxidation unterzogen. Die dadurch auf die Rußoberfläche aufgebrachten oxidischen Gruppen sollen dabei die Verträglichkeit mit den Harzen, in denen die Farbruße eingebracht und dispergiert werden sollen, erhöhen.

Es kommen bevorzugt Farbruße zum Einsatz. In bevorzugter Ausführungsform besitzen diese eine mittlere Primärpartikelgröße bestimmt durch Rasterelektronenmikroskopie von weniger als 100 nm bevorzugt von 10 bis 99 nm, weiter bevorzugt von 10 bis 50 nm, besonders bevorzugt von 10 bis 30 nm, insbesondere von 10 bis 20 nm. Die besonders feinteiligen Farbruße sind daher im erfindungsgemäßen Verfahren besonders bevorzugt, da die mit einer bestimmten Menge an Ruß erzielbare Farbtiefe und UV-Beständigkeit mit abnehmender Primärpartikelgröße zunimmt, andererseits aber auch deren Dispergierbarkeit abnimmt, weswegen insbesondere solche feinstteiligen Ruße einer Verbesserung in Bezug auf die Dispergierbarkeit bedürfen.

Die bevorzugt zum Einsatz kommenden Farbruße besitzen eine BET-Oberfläche bestimmt nach ISO 4652 durch Stickstoffadsorption von bevorzugt mindestens 20 m²/g, weiter bevorzugt von mindestens 50 m²/g, besonders bevorzugt von mindestens 100 m²/g, insbesondere von mindestens 150 m²/g.

Bevorzugt zum Einsatz kommende Farbruße sind darüber hinaus charakterisiert durch eine Öl-Adsorptions-Zahl gemessen nach ISO 4656 mit Dibutylphthalat (DBP) von bevorzugt 10 bis 200 ml/100 g, weiter bevorzugt von 30 bis 150 ml/100 g, besonders bevorzugt von 40 bis 120 ml/100 g, insbesondere von 40 bis 80 ml/100 g. Die Farbruße mit niedriger Öl-Adsorptions-Zahl erzielen in der Regel eine bessere Farbtiefe und sind insofern bevorzugt, lassen sich aber andererseits im Allgemeinen schwieriger dispergieren, weswegen insbesondere solche Ruße einer Verbesserung in Bezug auf die Dispergierbarkeit bedürfen.

Die zum Einsatz kommenden Ruße können und werden bevorzugt in pelletisierter oder geperlter Form eingesetzt. Die Perlung beziehungsweise Pelletisierung erfolgt dabei nach literaturbekannten Verfahren und dient einerseits der Erhöhung der Schüttdichte und der besseren Dosier(Fließ)eigenschaften, andererseits aber auch der Arbeitshygiene. Die Pellets beziehungsweise Perlen werden dabei in ihrer Härte bevorzugt so eingestellt, dass sie zwar Transport und Förderprozesse bei der Dosierung weitgehend unbeschadet überstehen, andererseits jedoch bei Einwirkung größerer mechanischer Scherkräfte, wie sie beispielsweise in handelsüblichen Pulvermischgeräten und/oder Compoundieraggregaten wirken, wieder vollständig in die Agglomerate zerscheren.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS^{®}, als nass-verarbeitete Pellets unter den Namen ELFTEX^{®}, REGAL^{®} und CSX^{®}, und in einer flockigen Erscheinungsform unter MONARCH^{®}, ELFTEX^{®}, REGAL^{®} und MOGUL^{®} - alle erhältlich von Cabot Corporation.

Insbesondere bevorzugt sind Ruße, die unter dem Handelsnamen BLACK PEARLS^{®} (CAS-Nr. 1333-86-4) gehandelt werden.

Ruße sind neben ihrer farbgebenden Wirkung auch als IR-Absorber zu verstehen.

Die IR-Absorber, insbesondere bevorzugt anorganische IR-Absorber können auch in Form von Gemischen untereinander verwendet werden. So sind im Falle von Mischungen Zusammensetzungen bevorzugt, die zwei bis einschließlich fünf, und besonders bevorzugt zwei oder drei, unterschiedliche IR-Absorber enthalten.

Die IR-Absorber können so zusammengestellt werden, dass ein maximaler Absorptionsbereich durch die Maxima der einzelnen IR-Absorber abgedeckt wird.

In einer weiteren bevorzugten Ausführungsform ist das Infrarot-Strahlung absorbierende Additiv im Aufbaumaterial in einer Menge von ≥ 0.0005 Gewichts-% bis ≤ 3 Gewichts-% (bevorzugt ≥ 0.005 Gewichts-% bis ≤ 2.5 Gewichts-%, ≥ 0.01 Gewichts-% bis ≤ 2 Gewichts-%), bezogen auf das Gesamtgewicht des Aufbaumaterials, enthalten.

In einer weiteren bevorzugten Ausführungsform bestrahlt während der Herstellung des Gegenstands mittels des additiven Fertigungsverfahrens aus dem Aufbaumaterial eine Infrarot-Strahlungsquelle das Aufbaumaterial mit Infrarot-Strahlung. Vorzugsweise wird selektiv die Oberfläche einer bereits aufgebauten Lage des Aufbaumaterials bestrahlt und somit selektiv aufgeheizt.

In einer weiteren bevorzugten Ausführungsform umfasst das Aufbaumaterial ein Polycarbonat, welches ein gewichtsmittleres Molekulargewicht M_{w} von ≥ 25000 bis ≤ 40000 g/mol aufweist. Die Bestimmung des Molekulargewichts erfolgt durch Gelpermeationschromatographie in Methylenchlorid bei 25 °C gegen Polycarbonat-Standards.

In einer weiteren bevorzugten Ausführungsform umfasst die Herstellung des Gegenstands mittels des additiven Fertigungsverfahrens die Schritte:
- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist bevorzugt, dass mindestens 90 Gewichts-% der Partikel einen Teilchendurchmesser von ≤ 0.25 mm, bevorzugt ≤ 0.2 mm, besonders bevorzugt ≤ 0.15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:
- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gaslaser ausgeführt sein. Denkbar ist auch ein Elektronenstrahl. Vorzugsweise erfolgt das Einwirken von Energie mittels eines IR-Lasers, so dass auch das erfindungsgemäß vorgesehene zumindest Zeitweise Aussetzen des Aufbaumaterials mit Infrarot-Strahlung im Wellenlängenbereich zwischen 600 nm und 1700 nm hierdurch verwirklicht wird.

In einer weiteren bevorzugten Ausführungsform umfasst die Herstellung des Gegenstands mittels des additiven Fertigungsverfahrens die Schritte:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 1 bis ≤ 20 Wiederholungen für das Auftragen durchgeführt werden.

Die einzelnen Filamente, welche aufgetragen werden, können einen Durchmesser von ≥ 30 µm bis ≤ 2000 µm aufweisen, bevorzugt ≥ 40 µm bis ≤ 1000 µm und besonders bevorzugt ≥ 50 µm bis ≤ 500 µm.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird. In dieser Ausführungsform wird vorzugsweise die jeweils zuletzt aufgetragene Schicht des Aufbaumaterials durch eine IR-Strahlungsquelle wie einem Nernst-Stift, Globar, Chromnickellegierungen, Quecksilberhochdrucklampen oder Wolframlampen der erfindungsgemäß vorgesehenen IR-Strahlung ausgesetzt.

In einer weiteren bevorzugten Ausführungsform wird das Verfahren innerhalb eines Bauraums durchgeführt und die Temperatur des Bauraums ist ≥ 10 °C (bevorzugt ≥ 25 °C, mehr bevorzugt ≥ 50 °C) geringer als die Glasübergangstemperatur T_{g} des Aufbaumaterials (bestimmt durch DSC gemäß DIN EN ISO 11357 bei einer Heizrate von 10 °C/min). Damit ist besonders bei komplexen und großen Bauteilen mit langer Fertigungszeit eine deutlich geringere thermische Belastung und bessere Maßhaltigkeit des Bauteils verbunden. In Pulversinterverfahren können die Pulver bei deutlich geringerer Bauraumtemperatur verarbeitet werden. Somit kann ein ungewolltes Versintern von Pulver unterhalb der (aktivierten) Oberfläche vermieden werden.

In einer weiteren bevorzugten Ausführungsform ist die Oberflächentemperatur einer in dem additiven Fertigungsverfahren zuletzt aufgetragenen Lage des Aufbaumaterials größer oder gleich einer Temperatur, welche in einer dynamisch-mechanischen Analyse des Aufbaumaterials (gemäß ISO 6721-10 bei einer Kreisfrequenz von 1/s) einem Schnittpunkt einer gedachten Geraden in dem Abschnitt der Kurve des Speichermoduls E', welche einem glasartigen Zustand des Aufbaumaterials entspricht, und einer gedachten Gerade in dem Abschnitt der Kurve des Speichermoduls E', in der der Speichermodul E' abfällt und einen Glasübergang anzeigt, entspricht. Diese Temperatur wird in der Literatur auch als "Onset"-Temperatur bei der Bestimmung der Glasübergangstemperatur anhand der E'-Kurve in einer dynamisch-mechanischen Analyse bezeichnet.

In einer weiteren bevorzugten Ausführungsform nimmt während des Verfahrens die Temperatur des abgelegten Aufbaumaterials von der Oberfläche hin zu tieferen Schichten ab. So hat in einer besonders bevorzugten Ausführungsform die zehnte Schicht unterhalb der obersten Schicht eine Temperatur, die ≤ 3 °C bevorzugt ≤ 5° C und besonders bevorzugt <_ 8 °C unterhalb der Temperatur der obersten Lage liegt.

Ein weiterer Aspekt der vorliegenden Erfindung, der nicht Bestandteil der Erfindung ist, ist ein Gegenstand, erhalten durch ein erfindungsgemäßes Verfahren, wobei der Gegenstand aus einem Aufbaumaterial hergestellt ist, welches ein Polymer ausgewählt aus der Gruppe: (Co)Polycarbonate, Polyester, Polyestercarbonate, Polyformale, Polyamide, Polyether, Polyvinylchlorid, Polymethyl(meth)acrylat, Polystyrol oder einer Kombination aus mindestens zwei hiervon und ein Infrarot-Strahlung absorbierendes Additiv umfasst und wobei der Gegenstand in Aufbaurichtung des in seiner Herstellung eingesetzten additiven Herstellungsverfahrens eine Zugfestigkeit (ISO 527) aufweist, welche ≥ 30% (bevorzugt ≥ 40%, mehr bevorzugt ≥ 50%) bis ≤ 100% der Zugfestigkeit (ISO 527) eines spritzgegossenen Probenkörpers aus dem gleichen Aufbaumaterial beträgt. Diese Zugfestigkeiten im additiv gefertigten Gegenstand betreffen somit die Haftung einzelner Lagen des Aufbaumaterials zueinander.

### Beispiele

Im Folgenden werden Ausführungsbeispiele, die zum Verständnis der Erfindung nützlich sind, näher beschrieben.

IR Absorber KHDS 872-G2 ist Lanthanhexaborit wurde bezogen von *"Sumitomo Metal Mining Co. Ltd. "*

Polycarbonat Makrolon^{®} 3108 gemäß Datenblatt Ausgabe 30.11.2017 wurde bezogen von *Covestro Deutschland AG*

### Beispiel 1: Herstellung von pulverförmigen Aufbaumaterialien

Folgende zwei Pulver wurden hergestellt:
Pulver 1: wurde aus Makrolon^{®} 3108 bezogen von durch Cryomahlen hergestellt (dso = 73 µm).
Pulver 2: wurde durch Mischung von Pulver 1 mit 0,01 Gew.-% IR Absorber *KHDS 872-G2* hergestellt und in einem Überkopfmixer homogenisiert.

Das kryogene Mahlen des Makrolon^{®} 3108 wurde in einer kegelförmigen (Rotor/Stator) Mühle mit flüssigem Stickstoff gemahlen. Dafür wurden Makrolon^{®} 3108 Granulen mit flüssigem Stickstoff vorgekühlt und mit einem großen Überschuss Stickstoff in die Mühle gegeben, um die Temperatur nicht über -80 °C während des Mahlens steigen zu lassen. Das Mahlerzeugnis wurde anschließend durch mindestens ein Sieb mit der Größe von 125 µm gesiebt. 50 Gew.-% des Pulvers hatten einen Durchmesser von kleiner ca. 73 µm (gemessen mittels Laserbeugung mit der HELOS - Partikelgrößenanalyse).

Die Pulver 1 und 2 wurden jeweils separat in einer Aluminiumschale ca. 5 mm hoch eingefüllt. Beide Pulver wurden einer Nahinfrarot (NIR) Strahlung ausgesetzt. Dazu wurde der Trockner *Cefla Finishing Drycoat 300P* verwendet. Die Pulver wurden für 50 s dem NIR-Licht ausgesetzt, die Leistung der NIR-Quelle betrug 20 kW. Mit einer Bestrahlungsfläche von 50 cm x 200 cm im Trockner resultiert eine Leistungsdichte von ca. 2 W/cm² Die Lufttemperatur im Trockner lag während der Bestrahlung zwischen 110°C und 120 °C.

Im Gegensatz zu Pulver 1, das nach der Bestrahlung in pulverförmigem Zustand wie ursprünglich eingefüllt verblieben ist, war die Oberfläche des Pulvers 2 zusammengesintert. Es wurde ein Film mit einer Schichtdicken von ca. 1 mm gebildet.

Auf diese Weise konnte gezeigt werden, dass nur das erfindungsgemäße Pulver 2 bei den gewählten Bedingungen gesintert wird, während das nicht-erfindungsgemäße Pulver 1 im ursprünglichen Pulverzustand verbleibt.

### Beispiel 2:

Das Pulver 2 gemäß Beispiel 1 wurde in einer Aluminiumschale ca. 5 mm hoch eingefüllt. Die Hälfte der Schale wurde mit einem Aluminiumdeckel abgedeckt. Die Schale wurde der NIR-Strahlung in einem Trockner *Cefla Finishing Drycoat 300P* ausgesetzt. Das Pulver wurde für 50 s dem NIR-Licht ausgesetzt, die Leistung der NIR-Quelle betrug wiederum 20 kW.

Im Bereich, in dem das Pulver ohne Abdeckung direkt der IR Strahlung ausgesetzt wurde, wurde die Oberfläche des Pulvers zusammengesintert. Es wurde ein dünner Film mit einer Schichtdicken von ca. 1 mm gebildet.

In dem Bereich, in dem das Pulver abgedeckt und nicht direkt der IR Strahlung ausgesetzt war, war das Pulver im losen Zustand wie ursprünglich eingefüllt verblieben.

## Patentansprüche

1. Verfahren zur Herstellung eines Gegenstands, umfassend den Schritt der Herstellung des Gegenstands mittels eines additiven Fertigungsverfahrens aus einem Aufbaumaterial,
wobei das Aufbaumaterial ein Polymer ausgewählt aus der Gruppe: (Co)Polycarbonate, Polyester, Polyestercarbonate, Polyformale, Polyamide, Polyether, Polyvinylchlorid, Polymethyl(meth)acrylat, Polystyrol oder einer Kombination aus mindestens zwei hiervon und ein Infrarot-Strahlung absorbierendes Additiv umfasst,
wobei das Infrarot-Strahlung absorbierende Additiv im Aufbaumaterial in einer Menge von ≥ 0.0005 Gewichts-% bis ≤ 3 Gewichts-%, bezogen auf das Gesamtgewicht des Aufbaumaterials, enthalten ist,
wobei das Infrarot-Strahlung absorbierende Additiv hinsichtlich seiner chemischen Struktur und seiner Konzentration im Aufbaumaterial derart ausgewählt ist, dass es die Transmission des Aufbaumaterials für Licht im Wellenlängenbereich zwischen 600 nm und 1700 nm, , gemessen gemäß ISO 13468-2, an einer 100 µm dicken Probe, um ≥ 2.5 Prozentpunkte gegenüber einer das Infrarot-Strahlung absorbierende Additiv nicht enthaltenden Probe des Aufbaumaterials mit einer Dicke von 100 µm verringert
und wobei während des additiven Fertigungsverfahrens das Aufbaumaterial zumindest zeitweise Infrarot-Strahlung im Wellenlängenbereich zwischen 600 nm und 1700 nm ausgesetzt wird,
wobei, das Infrarot-Strahlung absorbierende Additiv an der Oberfläche des Aufbaumaterials vorliegt und nicht innerhalb des Aufbaumaterials verteilt ist sowie ausgewählt ist aus der Gruppe: Boride, Wolframate, Mischungen aus mindestens einem Borid und mindestens einem Wolframat, organischer IR-Absorber oder eine Kombination von mindestens zwei hiervon.

2. Verfahren gemäß Anspruch 1, **dadurch gekennzeichnet, dass** das Infrarot-Strahlung absorbierende Additiv Lanthanhexaborid ist.

3. Verfahren gemäß Anspruch 1 oder 2, **dadurch gekennzeichnet, dass** während der Herstellung des Gegenstands mittels des additiven Fertigungsverfahrens aus dem Aufbaumaterial eine Infrarot-Strahlungsquelle das Aufbaumaterial mit Infrarot-Strahlung bestrahlt.

4. Verfahren gemäß einem der Ansprüche 1 bis 3, **dadurch gekennzeichnet, dass** das Aufbaumaterial ein Polycarbonat umfasst, welches ein gewichtsmittleres Molekulargewicht M_{w} von ≥ 25000 bis ≤ 40000 g/mol aufweist.

5. Verfahren gemäß einem der Ansprüche 1 bis 4, **dadurch gekennzeichnet, dass** die Herstellung des Gegenstands mittels des additiven Fertigungsverfahrens die Schritte umfasst:
- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

6. Verfahren gemäß Anspruch 5, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:
- Bestrahlen eines ausgewählten Teils der Schicht, entsprechend einem Querschnitt des Gegenstandes, mit einem Energiestrahl, so dass die Partikel im ausgewählten Teil verbunden werden.

7. Verfahren gemäß einem der Ansprüche 1 bis 4, **dadurch gekennzeichnet, dass** die Herstellung des Gegenstands mittels des additiven Fertigungsverfahrens die Schritte umfasst:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

8. Verfahren gemäß einem der Ansprüche 1 bis 7, **dadurch gekennzeichnet, dass** das Verfahren innerhalb eines Bauraums durchgeführt wird und die Temperatur des Bauraums ≥ 10 °C geringer ist als die Glasübergangstemperatur T_{g} des Aufbaumaterial, bestimmt durch DSC gemäß DIN EN ISO 11357 bei einer Heizrate von 10 °C/min.

9. Verfahren gemäß einem der Ansprüche 1 bis 8, **dadurch gekennzeichnet, dass** die Oberflächentemperatur einer in dem additiven Fertigungsverfahren zuletzt aufgetragenen Lage des Aufbaumaterials größer oder gleich einer Temperatur ist, welche in einer dynamisch-mechanischen Analyse des Aufbaumaterials, gemäß ISO 6721-10 bei einer Kreisfrequenz von 1/s, einem Schnittpunkt einer gedachten Geraden in dem Abschnitt der Kurve des Speichermoduls E', welche einem glasartigen Zustand des Aufbaumaterials entspricht, und einer gedachten Gerade in dem Abschnitt der Kurve des Speichermoduls E', in der der Speichermodul E' abfällt und einen Glasübergang anzeigt, entspricht.

## Claims

1. Process for producing an article, comprising the step of producing the article by means of an additive manufacturing method from a construction material,
wherein the construction material comprises a polymer selected from the group of: (co)polycarbonates, polyesters, polyestercarbonates, polyformals, polyamides, polyethers, polyvinylchloride, polymethyl(meth)acrylate, polystyrene or a combination of at least two of these and an additive that absorbs infrared radiation,
wherein the additive that absorbs infrared radiation is present in the construction material in an amount of ≥ 0.0005% by weight to ≤ 3% by weight, based on the total weight of the construction material,
wherein the additive that absorbs infrared radiation, in terms of its chemical structure and its concentration in the construction material, is selected such that it reduces the transmittance of the construction material for light in the wavelength range between 600 nm and 1700 nm, measured to ISO 13468-2, determined on a 100 µm-thick sample, by ≥ 2.5 percentage points compared to a sample of the construction material having a thickness of 100 µm that does not contain the additive that absorbs infrared radiation,
and wherein, during the additive manufacturing method, the construction material is at least temporarily exposed to infrared radiation in the wavelength range between 600 nm and 1700 nm,
wherein the additive that absorbs infrared radiation is present at the surface of the construction material and is not distributed within the construction material and is selected from the group of: borides, tungstates, mixtures of at least one boride and at least one tungstate, organic IR absorbers or a combination of at least two of these.

2. Process according to Claim 1, **characterized in that** the additive that absorbs infrared radiation is lanthanum hexaboride.

3. Process according to Claim 1 or 2, **characterized in that**, during the production of the article by means of the additive manufacturing method from the construction material, an infrared radiation source irradiates the construction material with infrared radiation.

4. Process according to any of Claims 1 to 3, **characterized in that** the construction material includes a polycarbonate having a weight-average molecular weight M_{w} of ≥ 25 000 g/mol to ≤ 40 000 g/mol.

5. Process according to any of Claims 1 to 4, **characterized in that** the production of the article by means of the additive manufacturing process comprises the steps of:
- applying a layer of particles including the construction material to a target surface;
- introducing energy into a selected portion of the layer corresponding to a cross section of the article such that the particles in the selected portion are bonded;
- repeating the steps of applying and introducing energy for a multitude of layers, such that the bonded portions of the adjacent layers become bonded in order to form the article.

6. Process according to Claim 5, **characterized in that** the introducing of energy into a selected portion of the layer corresponding to a cross section of the article such that the particles in the selected portion are bonded comprises the following step:
- irradiating a selected portion of the layer corresponding to a cross section of the article with a beam of energy, such that the particles in the selected portion are bonded.

7. Process according to any of Claims 1 to 4, **characterized in that** the production of the article by means of the additive manufacturing process comprises the steps of:
- applying a filament of an at least partly molten construction material to a carrier, such that a layer of the construction material is obtained, corresponding to a first selected cross section of the article;
- optionally applying a filament of the at least partly molten construction material to a previously applied layer of the construction material, such that a further layer of the construction material is obtained, which corresponds to a further selected cross section of the article and which is bonded to the layer applied previously;
- optionally repeating the step of applying a filament of the at least partly molten construction material to a previously applied layer of the construction material until the article has been formed.

8. Process according to any of Claims 1 to 7, **characterized in that** the process is conducted within a construction space and the temperature of the construction space is ≥ 10°C lower than the glass transition temperature T_{g} of the construction material (determined by DSC to DIN EN ISO 11357 at a heating rate of 10°C/min).

9. Process according to any of Claims 1 to 8, **characterized in that** the surface temperature of a layer of the construction material applied last in the additive manufacturing method is not less than a temperature which, in a dynamic-mechanical analysis of the construction material to ISO 6721-10 at an angular frequency of 1/s, corresponds to a point of intersection of a theoretical straight line in the section of the curve of the storage modulus E' corresponding to a vitreous state of the construction material and a theoretical straight line in the section of the curve of the storage modulus E' in which the storage modulus E' declines and indicates a glass transition.

## Revendications

1. Procédé pour la fabrication d'un objet, comprenant l'étape de la fabrication de l'objet au moyen d'un procédé de fabrication additive à partir d'un matériau de construction,
dans lequel le matériau de construction comprend un polymère choisi dans le groupe : (co)polycarbonates, polyesters, polyestercarbonates, polyformals, polyamides, polyéthers, poly(chlorure de vinyle), poly[(méth)acrylate de méthyle], polystyrène ou dans une association d'au moins deux de ceux-ci et un additif absorbant le rayonnement infrarouge,
dans lequel l'additif absorbant le rayonnement infrarouge est contenu dans le matériau de construction en une quantité de ≥ 0,0005 % en poids à ≤ 3 % en poids, par rapport au poids total du matériau de construction,
dans lequel l'additif absorbant le rayonnement infrarouge est choisi, en ce qui concerne sa structure chimique et sa concentration dans le matériau de construction, de telle façon qu'il diminue la transmission du matériau de construction pour de la lumière dans la gamme de longueurs d'onde entre 600 nm et 1 700 nm, mesurée selon ISO 13468-2, sur un échantillon de 100 um d'épaisseur, de ≥ 2,5 points de pourcentage par rapport à un échantillon du matériau de construction ayant une épaisseur de 100 µm, qui ne contient pas l'additif absorbant le rayonnement infrarouge
et dans lequel pendant le processus de fabrication additive le matériau de construction est au moins par instants exposé à un rayonnement infrarouge dans la gamme de longueurs d'onde entre 600 nm et 1 700 nm,
dans lequel l'additif absorbant le rayonnement infrarouge se trouve à la surface du matériau de construction et n'est pas réparti à l'intérieur du matériau de construction et est choisi dans le groupe : borures, tungstates, mélanges d'au moins un borure et d'au moins un tungstate, absorbeurs d'IR organiques ou une association d'au moins deux de ceux-ci.

2. Procédé selon la revendication 1, **caractérisé en ce que** l'additif absorbant le rayonnement infrarouge est l'hexaborure de lanthane.

3. Procédé selon la revendication 1 ou 2, **caractérisé en ce que** pendant la fabrication de l'objet au moyen du procédé de fabrication additive à partir du matériau de construction une source de rayonnement infrarouge irradie avec un rayonnement infrarouge le matériau de construction.

4. Procédé selon l'une quelconque des revendications 1 à 3, **caractérisé en ce que** le matériau de construction comprend un polycarbonate qui présente une masse moléculaire moyenne en poids M_{w} de ≥ 25 000 à ≤ 40 000 g/mole.

5. Procédé selon l'une quelconque des revendications 1 à 4, **caractérisé en ce que** la fabrication de l'objet au moyen du procédé de fabrication additive comprend les étapes consistant à:
- appliquer une couche de particules, comportant le matériau de construction, sur une surface cible ;
- faire agir de l'énergie sur une partie choisie de la couche, correspondant à une section transversale de l'objet, de sorte que les particules sont jointes dans la partie choisie ;
- répéter les étapes de l'application et de l'action d'énergie pour une pluralité dde couches, de sorte que les parties assemblées des couches voisines se lient, afin de construire l'objet.

6. Procédé selon la revendication 5, **caractérisé en ce que** l'action d'énergie sur une partie choisie de la couche, correspondant à une section transversale de l'objet, de sorte que les particules sont jointes dans la partie choisie, comprend l'étape suivante :
- irradiation d'une partie choisie de la couche, correspondant à une section transversale de l'objet, avec un faisceau dénergie, de sorte que les particules sont jointes dans la partie choisie.

7. Procédé selon l'une quelconque des revendications 1 à 4, **caractérisé en ce que** la fabrication de l'objet au moyen du procédé de fabrication additive comprend les étapes consistant à:
- l'application d'un filament d'un matériau de construction au moins partiellement fondu sur un support, de manière à obtenir une strate du matériau de construction, qui correspond à une première section transversale choisie de l'objet ;
- l'application optionnelle d'un filament du matériau de construction au moins partiellement fondu sur une strate précédemment appliquée du matériau de construction, de manière à obtenir une nouvelle strate du matériau de construction, qui correspond à une nouvelle section transversale choisie de l'objet et qui est assemblée avec la strate précédemment appliquée ;
- répétition optionnelle de l'étape de l'application d'un filament du matériau de construction au moins partiellement fondu sur une strate précédemment appliquée du matériau de construction, jusqu'à ce que l'objet soit construit.

8. Procédé selon l'une quelconque des revendications 1 à 7, **caractérisé en ce que** le procédé est effectué à l'intérieur d'une chambre de construction et la température de la chambre de construction est inférieure de ≥ 10 °C à la température de transition vitreuse T_{g} du matériau de construction, déterminée par DSC selon DIN EN ISO 11357 à une vitesse de chauffage de 10 °C/min.

9. Procédé selon l'une quelconque des revendications 1 à 8, **caractérisé en ce que** la température de surface d'une strate du matériau de construction appliquée en dernier dans le procédé de fabrication additive est supérieure ou égale à une température qui, dans une analyse dynamique-mécanique du matériau de construction, selon ISO 6721-10 à une fréquence circulaire de 1/s, correspond à une intersection d'une droite imaginaire dans la partie de la courbe du module d'accumulation E', qui correspond à un état vitreux du matériau de construction, et d'une droite imaginaire dans la partie de la courbe du module d'accumulation E', dans laquelle le module d'accumulation décroît et indique une transition vitreuse.
